Europäisches Patentamt

European Patent Office

Office européen des brevets

(19)

(11) Veröffentlichungsnummer: **0 022 246**
**A1**

(12) **EUROPÄISCHE PATENTANMELDUNG**

(21) Anmeldenummer: 80103773.0

(22) Anmeldetag: 02.07.80

(51) Int. Cl.³: **G 01 N 21/37**

(30) Priorität: 02.07.79 DE 2926662

(43) Veröffentlichungstag der Anmeldung:
14.01.81 Patentblatt 81/2

(84) Benannte Vertragsstaaten:
BE FR GB IT LU

(71) Anmelder: SIEMENS AKTIENGESELLSCHAFT Berlin
und München
Postfach 22 02 61
D-8000 München 22(DE)

(72) Erfinder: Weinel, Johann
Strassburger Strasse 13
D-7500 Karlsruhe(DE)

(54) Nichtdispersiver Infrarot-Gasanalysator.

(57) Nichtdispersiver IR-Gasanalysator nach dem Zweistrahl-Wechsellichtprinzip mit Strahlungsquelle (1), Meßküvette (4), Vergleichsküvette (5), rotierender Blende (2), gasgefüllten Detektorkammern (6,7) mit Mitteln (8,9) zur Umformung der zwischen ihren Volumen auftretenden Druckdifferenzen in ein elektrisches Signal. Die Rückwände der Detektorkammern (6,7) sind mit infrarotstrahlungsdurchlässigen Fenstern (3) versehen, dahinter ist ein Strahlenumlenksystem (10) angeordnet, welches die aus der Detektorkammer (6) im Meßstrahlengang austretende Strahlung in die Detektorkammer (7) des Vergleichsstrahlengangs reflektiert und umgekehrt.

Mit Hilfe optischen Gegenkopplung wird erreicht, daß der von der Absorptionsbanden-Randstrahlung herrührende Anteil am Ausgangssignal geschwächt und somit die Selektivität verbessert wird.

./...

SIEMENS AKTIENGESELLSCHAFT     Unser Zeichen

Berlin und München     VPA 79 P 3 5 2 8

## Nichtdispersiver Infrarot-Gasanalysator

Die Erfindung bezieht sich auf einen nichtdispersiven IR-Gasanalysator nach dem Zweistrahl-Wechsellichtprinzip mit Strahlungsquelle, Meßküvette, Vergleichsküvette, rotierender Blende, gasgefüllten Detektorkammern mit Mitteln zur Umformung der zwischen den Detektorkammern auftretenden Druckdifferenzen in ein elektrisches Signal.

Derartige Geräte werden vorzugsweise zur Bestimmung einer Komponente (Meßgas) eines Gasgemischs eingesetzt, welches durch die Meßküvette im Meßstrahlengang geführt wird, während in der Vergleichsküvette im Vergleichsstrahlengang ein neutrales Gas enthalten ist.
Das Meßgas oder ein Gas mit ähnlichem Absorptionsverhalten dient auch als Füllung der Detektorkammern, die üblicherweise pneumatisch gegeneinandergeschaltet sind.
In der die Detektorkammern verbindenden Leitung ist ein Strömungsfühler oder ein Membrankondensator zur Umwandlung der pneumatischen Wechseldruckdifferenzen in ein elektrisches Signal eingeschaltet.

Sp 4 Scl / 29.06.1979

Das durch die Meßküvette geführte Gasgemisch enthält neben dem Meßgas in der Regel auch noch Störgase, deren Absorptionsbanden sich mit der des Meßgases überlappen und die Ursache der sogenannten Querempfindlichkeit der Messung sind.

Es besteht die Aufgabe, bei einem IR-Gasanalysator der eingangs genannten Art einfach aufgebaute und einstellbare Mittel zur Verringerung der Querempfindlichkeit und damit zur Verbesserung der Selektivität vorzusehen.

Eine Lösung der Aufgabe wird darin gesehen, daß die Rückwände der Detektorkammern mit IR-strahlungsdurchlässigen Fenstern versehen sind und daß hinter den Detektorkammern ein Strahlenumlenksystem angeordnet ist, welches die aus der Detektorkammer im Meßstrahlengang austretende Strahlung in die Detektorkammer des Vergleichsstrahlengangs reflektiert und umgekehrt.
Mit Hilfe dieser optischen Gegenkopplung wird bei der Differenzbildung der von der Bandenrandstrahlung herrührende Signalanteil des Differenzsignals verkleinert, die Selektivität damit verbessert.

Die Wirkung des gegengekoppelten Strahlungsanteils hängt noch von der Länge der Absorptionsstrecke in den Detektorkammern ab.
In einer Ausführungsform der Erfindung sind deshalb die Detektorkammern so ausgestaltet, daß der reflektierte Strahlungsanteil unter einem Winkel in diese eintritt und an ihren Wänden mehrfach reflektiert wird.
Bei einer anderen bevorzugten Ausführungsform, insbesondere für Wechsellicht-Gegentaktbetrieb, wird die Verlängerung der Absorptionsstrecke dadurch erreicht, daß in jedem Strahlengang je zwei optisch hintereinandergeschaltete Detektorkammern vorgesehen sind, hinter denen das Strahlumlenksystem angeordnet ist.

Mit diesen Maßnahmen zur Verlängerung der Absorptionsstrecke kann erreicht werden, daß die Querempfindlichkeit für bestimmte Gase sogar überkompensiert, also negativ gehalten wird.

Damit ergibt sich die Möglichkeit, in dem Strahlengang des Strahlumlenksystems eine verstellbare Blende zur exakten Nullkompensation der Querempfindlichkeit vorzusehen.

Die Nullkompensation gilt jedoch streng nur für ein bestimmtes Störgas. Ist noch ein weiteres, einen negativen Ausschlag verursachendes Störgas zu berücksichtigen, so kann das Strahlenumlenksystem in einer mit diesem Störgas bestimmter Konzentration gefüllten Kammer angeordnet werden, wodurch auch für dieses Störgas eine Nullkompensation erreicht wird.

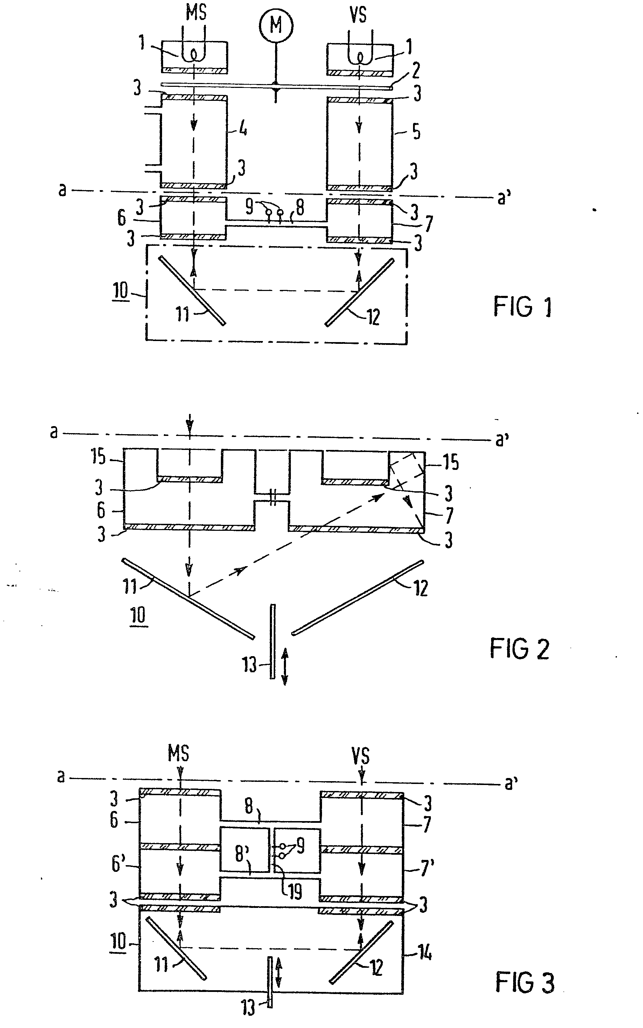

Zur Erläuterung der Erfindung sind in den Figuren 1 bis 3 Ausführungsbeispiele schematisch dargestellt und im folgenden beschrieben.

Figur 1: Ein nichtdispersiver IR-Gasanalysator bekannter Bauart nach dem Zweistrahl-Wechsellichtprinzip weist Infrarot-Strahlungsquellen 1 für den Meßstrahlengang MS und den Vergleichsstrahlengang VS auf. Zur funktionsbedingten periodischen Unterbrechung der Strahlengänge dient eine motorisch angetriebene, rotierende Blende 2, die in diesem Beispiel im Gleichtaktverfahren den Meßstrahl und den Vergleichsstrahl gleichphasig, bei dem später erwähnten Gegentaktverfahren gegenphasig unterbricht. Es folgen dann die von dem zu untersuchenden Gasgemisch durchströmte Meßküvette 4 im Meßstrahlengang MS und entsprechend die mit einem nicht absorbierenden Gas gefüllte Vergleichsküvette 5 im Vergleichsstrahlengang VS. Beide sind an ihren Stirnseiten mit infrarotdurchlässigen Fenstern 3 versehen.

Es folgen weiter die Detektorkammern 6 und 7 mit infrarotdurchlässigen Fenstern 3 auf ihren Vorder- und Rückseiten, die mit einem Gas gefüllt sind, das der zu bestimmenden Komponente des in der Meßküvette 4 befindlichen Gasgemisches entspricht.

Die Volumen der beiden Detektorkammern 6 und 7 sind über
eine Leitung 8 pneumatisch gegeneinandergeschaltet,
darin ist ein Störmungsfühler 9 angeordnet, welcher die
druckdifferenzbedingten, pulsierenden Strömungen in ein
elektrisches Signal umwandelt.

Hinter den Detektorkammern 6 und 7 befindet sich ein
Strahlenumlenksystem 10, welches beispielsweise aus zwei
unter 45° gegen die Mittelachse der Strahlengänge geneigten Spiegeln 11 und 12 besteht. Die aus den Fenstern 3
in den Rückwänden der Detektorkammern 6, 7 austretende
Strahlung wird gegenseitig axial in die Detektorkammern
zurückreflektiert, wodurch bei der pneumatischen Differenzbildung der von dem in der Regel störgasbeeinflußten
Randgebieten der Absorptionsspektren herrührende Anteil
am Ausgangssignal geschwächt und die Selektivität somit
erhöht wird.

In <u>Figur 2</u> ist eine andere Ausführungsform der Detektorkammern 6 und 7 in Verbindung mit dem Strahlenumlenksystem 10 dargestellt.
Während in dem Beispiel nach Figur 1 die reflektierten
Strahlanteile durch die rückwärtigen Fenster 3 in axialer
Richtung in die Detektorkammern 6 und 7 eintreten, sind
in dem Beispiel nach Figur 2 die Spiegel 11 und 12 des
Strahlenumlenksystems 10 so angeordnet, daß der Wiedereintritt der reflektierten Strahlen unter einem Winkel
zur Kammerachse geschieht.
Die zylindrischen Detektorkammern 6 und 7 weisen hier
einen über die Ebenen der Eintrittsfenster 3 hinausragenden hohlringartigen Fortsatz 15 auf, dessen Innenwände,
die achsparallel bzw. radial zur Kammerachse verlaufen, reflektierend ausgebildet sind, so daß der aus dem Umlenksystem 10 in die Detektorkammern 6, 7 eintretende
Strahl durch Mehrfachreflexion eine größere Absorptionsstrecke durchläuft und somit die Absorption verstärkt
wird.

Eine weitere Ausführungsform der Detektorkammern und des
Strahlenumlenksystems mit verlängerter Absorptionsstrecke
ist in Figur 3 dargestellt.
In jedem Strahlengang MS, VS sind je zwei gasgefüllte
Detektorkammern 6 und 6' bzw. 7 und 7' optisch hintereinandergeschaltet. Die ersten Kammern 6, 7 der Strahlengänge sind über die Leitung 8 pneumatisch gegeneinandergeschaltet, desgleichen die jeweils zweiten Kammern
6', 7' über die Leitung 8'. Die Mittel 9 zur Umformung
der Druckdifferenzen in ein elektrisches Signal, hier
ein thermischer Strömungsfühler, sind in einer Querverbindung 19 zwischen den Leitungen 8 und 8' angeordnet.

Das Strahlenumlenksystem 10 befindet sich hinter den
rückseitig ebenfalls mit IR-durchlässigen Fenstern 3
versehenen zweiten Kammern 6' und 7' des Detektorsystems.
Infolge der durch die Doppelkammeranordnung verlängerten
Absorptionsstrecke der axial in die Kammern eintretenden
umgelenkten Strahlen kann auch bei dieser für Gegentaktbetrieb besonders geeigneten Anordnung eine Überkompensation des Störgaseinflusses erzielt werden.
Mit einer im Strahlengang des Strahlenumlenksystems 10
angeordneten verstellbaren Blende 13, hier in Form eines
Schiebers, kann die Querempfindlichkeit bei den überkompensierenden Ausführungen nach Figur 2 und 3 für ein
bestimmtes, einen negativen Ausschlag erzeugendes Störgas auf Null gebracht werden. Bei der nicht überkompensierenden Anordnung nach Figur 1 kann ebenfalls mittels
einer in dem Strahlengang angebrachten verstellbaren Blende die Querempfindlichkeit auf einen bestimmten
Wert eingestellt und damit bei der Kalibrierung berücksichtigt werden.

Zur Kompensation des Einflusses eines weiteren Störgases kann das Strahlenumlenksystem 10, wie beispielsweise in Figur 3 dargestellt, in einer Kammer 14 angeordnet sein, die dieses Störgas in einer zur Kompensation ausreichenden Konzentration aufweist.

Patentansprüche

1. Nichtdispersiver IR-Gasanalysator nach dem Zweistrahl-Wechsellichtprinzip mit Strahlungsquelle, Meßküvette, Vergleichsküvette, rotierender Blende, gasgefüllten Detektorkammern mit Mitteln zur Umformung der zwischen ihren Volumen auftretenden Druckdifferenzen in ein elektrisches Signal, d a d u r c h  g e k e n n z e i c h n e t , daß die Rückwände der Detektorkammern (6, 7; 6', 7') mit infrarotstrahlungsdurchlässigen Fenstern (3) versehen sind und daß hinter den Detektorkammern (6 und 7 bzw. 6' und 7') ein Strahlenumlenksystem (10) angeordnet ist, welches die aus der Detektorkammer (6 bzw. 6') im Meßstrahlengang (MS) austretende Strahlung in die Detektorkammer (7 bzw. 7') des Vergleichsstrahlengangs (VS) reflektiert und umgekehrt.

2. Nichtdispersiver IR-Gasanalysator nach Anspruch 1, d a d u r c h  g e k e n n z e i c h n e t ,  daß in jedem Strahlengang (MS, VS) je zwei gasgefüllte Detektorkammern (6, 6'; 7, 7') optisch hintereinandergeschaltet sind, wobei die jeweils ersten Kammern (6, 7) und die jeweils zweiten Kammern (6', 7') über je eine Leitung (8, 8') miteinander verbunden sind und daß die Mittel (9) zur Umformung der Druckdifferenzen in ein elektrisches Signal in einer Querverbindung (19) der Leitungen (8, 8') angeordnet sind und daß das Strahlenumlenksystem (10) hinter den zweiten Detektorkammern (6', 7') angeordnet ist.

3. Nichtdispersiver IR-Gasanalysator nach Anspruch 1 oder 2, d a d u r c h  g e k e n n z e i c h n e t , daß das Strahlenumlenksystem (10) derart ausgebildet ist, daß die Strahlen in axialer Richtung in die Detektorkammern (6, 7 bzw. 6', 7') reflektiert werden.

4. Nichtdispersiver IR-Gasanalysator nach Anspruch 1 oder 2, d a d u r c h  g e k e n n z e i c h n e t ,

- 2 -     VPA 79 P 3520

daß die Strahlen unter einem Winkel in die Detektorkammern (6, 7 bzw. 6', 7') eintreten und an deren Wänden mehrfach reflektiert werden.

5. Nichtdispersiver IR-Gasanalysator nach Anspruch 4, d a d u r c h   g e k e n n z e i c h n e t ,   daß jede Detektorkammer (6, 7) einen Fortsatz (15) aufweist, dessen achsparallel und radial verlaufende Innenwände reflektierend ausgebildet sind.

6. Nichtdispersiver IR-Gasanalysator nach Anspruch 1, 2 oder 5,   d a d u r c h   g e k e n n z e i c h n e t ,  daß in dem Strahlengang des Strahlenumlenksystems (10) eine verstellbare Blende (13) angeordnet ist.

7. Nichtdispersiver IR-Gasanalysator nach einem der vorhergehenden Ansprüche,   d a d u r c h   g e k e n n - z e i c h n e t ,   daß das Strahlenumlenksystem (10) in einer mit einem Störgas bestimmter Konzentration gefüllten Kammer (14) angeordnet ist.

FIG 1

FIG 2

FIG 3

| | Europäisches | EUROPÄISCHER RECHERCHENBERICHT | Nummer der Anmeldung |
|---|---|---|---|
| | Patentamt | | EP 80 10 3773.0 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl3) |
|---|---|---|---|
| | DE - A1 - 2 522 428 (H. HUMMEL) <br> * Ansprüche 1, 2; Fig. 1, 6 * <br> -- | 1,3 | G 01 N 21/37 |
| | DE - A1 - 2 639 210 (SIEMENS AG) <br> * ganzes Dokument * <br> -- | 6 | |
| A | US - A - 4 103 163 (T. HAMADA) <br> * ganzes Dokument * <br> -- | | **RECHERCHIERTE SACHGEBIETE (Int. Cl3)** |
| A,P | TECHNISCHES MESSEN, Band 47, Nr. 3, <br> März 1980, München <br> W. FABINSKI et al. "Verfahren zur Er-höhung der Selektivität bei NDIR-Fotometern" <br> Seiten 113 bis 119 <br> * ganzes Dokument * <br> ---- | | G 01 N 21/35 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 07-10-1980 | SCHWARTZ |

EPA form 1503.1 06.78